# EUROPÄISCHE PATENTSCHRIFT

(11) **EP 2 988 645 B1**
(45) Veröffentlichungstag und Bekanntmachung des Hinweises auf die Patenterteilung: **31.05.2017**
(21) Anmeldenummer: 14720892.0
(22) Anmeldetag: 11.04.2014
(51) Int. Cl.: A47L 13/51, B62B 3/04, B62B 3/10

(54) **REINIGUNGSFAHRWAGEN**
CLEANING TROLLEY
CHARIOT DE NETTOYAGE

(30) Priorität: 24.04.2013 DE 102013007040
(43) Veröffentlichungstag der Anmeldung: 02.03.2016
(73) Patentinhaber: Carl Freudenberg KG, 69469 Weinheim (DE)
(72) Erfinder: EISENHUT, Andreas, 82049 Pullach (DE); ZIMMERMANN, Christoph, 69469 Weinheim (DE); MEIER, Bruno, CH-5417 Untersiggenthal (CH); THOMA, Christian, 79774 Albbruck (DE)
(86) Internationale Anmeldenummer: PCT/EP2014/000970
(87) Internationale Veröffentlichungsnummer: WO 2014/173503

(56) Entgegenhaltungen:
- EP-A1- 1 055 581
- DE-B3-102005 044 984
- GB-A- 2 427 174
- US-B1- 6 669 214

## Beschreibung

### Technisches Gebiet

Die Erfindung betrifft einen Reinigungsfahrwagen, umfassend eine Bodenplatte und eine mit vertikalem Abstand über der Bodenplatte angeordnete Arbeitsplatte, wobei die Bodenplatte und die Arbeitsplatte durch ein in dem vertikalen Abstand angeordnetes Gestänge miteinander verbunden sind, wobei das Gestänge durch zumindest zwei sich quer zu einer Hauptfahrrichtung des Reinigungsfahrwagens nicht-parallel zueinander erstreckende Streben gebildet ist, wobei die Streben jeweils mit einem ersten stirnseitigen Ende mit einem ersten Befestigungsbereich der Bodenplatte verbunden sind und jeweils mit einem zweiten stirnseitigen Ende mit einem zweiten Befestigungsbereich der Arbeitsplatte, wobei der erste Befestigungsbereich eine erste Fläche aufweist und der zweite Befestigungsbereich eine zweite Fläche.

### Stand der Technik

Solche Reinigungsfahrwagen sind allgemein bekannt und werden häufig von gewerblich tätigen Reinigungsfirmen, zum Beispiel zur Reinigung von Büroetagen, eingesetzt. Reinigungsutensilien, wie Eimer, Putztücher, Abfalleimer und/oder Flächenreinigungsgeräte, sind im Reinigungsfahrwagen aufgenommen oder an diesem befestigt.
Um all die Reinigungsutensilien aufnehmen zu können, weisen die vorbekannten Reinigungsfahrwagen große Abmessungen auf, wobei häufig trotz der großen Abmessungen Reinigungsutensilien außen am Reinigungsfahrwagen befestigt sind und über die randseitige Begrenzung des Reinigungsfahrwagens überstehen, so dass der Reinigungsfahrwagen dadurch noch unhandlicher wird und die Gefahr besteht, dass zum Beispiel Wände oder Möbel durch die außen an dem Reinigungsfahrwagen hängenden Reinigungsutensilien beschädigt werden oder dass Reinigungsutensilien vom Reinigungsfahrwagen abfallen.

Ein Fahrwagen ist aus der US 6,669,214 B1 bekannt und als fahrbarer Werkzeugwagen zum Beispiel für Autoreparaturwerkstätten ausgebildet.
Die Bodenplatte und die Arbeitsplatte sind jeweils rechteckig ausgebildet und haben eine im Wesentlichen übereinstimmende Größe.
Die Arbeitsplatte ist zweiteilig ausgebildet und umfasst einen Rahmen, der starr mit dem Fahrwagen verbunden ist. In den Rahmen kann ein mit Rädern versehenes, fahrbares Brett eingehängt werden, das die Öffnung, die der Rahmen begrenzt, vollständig verschließt. Dieses fahrbare Brett kann vom Monteur genutzt werden, um zum Beispiel, mit dem Rücken auf dem Brett liegend, unter ein aufgebocktes Fahrzeug zu rollen, um dort erforderliche Reparaturen vornehmen zu können. Auf dem Brett sind flache Behälter vorgesehen, in die der Monteur Kleinteile, die er benötigt, ablegen kann.
In der Höhe zwischen der Bodenplatte und der Arbeitsplatte ist ein Zwischenboden eingezogen, der ebenfalls Behälter für benötigte Utensilien umfasst.
Das Gestänge, das die Bodenplatte mit der Arbeitsplatte verbindet, umfasst vier Säulen, die die entsprechenden Ecken von Bodenplatte und Rahmen der Arbeitsplatte verbinden.
Die in Hauptfahrrichtung vorderen und hinteren Säulen sind nicht-parallel, hier trapezförmig, zueinander angeordnet.

Aus der EP 1 055 581 A1 ist ein Reinigungsfahrwagen bekannt. Der vorbekannte Reinigungsfahrwagen ist zusammenfaltbar, wobei das Gestänge zwischen der Bodenplatte und der Arbeitsplatte scherenförmig ausgebildet ist. In Hauptfahrrichtung des Reinigungsfahrwagens ist das Gestänge X-förmig ausgebildet und umfasst kurze und lange Streben. Quer zur Hauptfahrrichtung betrachtet, sind die kurzen und langen Streben parallel zueinander angeordnet. Die beiden langen Streben sind durch eine obere und eine untere Stange verbunden, so dass ein erster fester Rahmen gebildet wird. Die beiden kurzen Streben sind durch eine untere Stange und einen Bügel fest verbunden, um einen zweiten festen Rahmen zu bilden. Obwohl die kurzen und die langen Streben, quer zur Hauptfahrrichtung betrachtet, parallel zueinander angeordnet sind, haben die kürzeren Streben geringfügig weniger Abstand voneinander, als die langen Streben. Dadurch wird erreicht, dass der von den kürzeren Streben gebildete zweite Rahmen, quer zur Hauptfahrrichtung betrachtet, zwischen den langen Streben des ersten Rahmens angeordnet ist. Die zuvor beschriebene Ausgestaltung ist die Voraussetzung dafür, dass dieser vorbekannte Reinigungsfahrwagen zusammenfaltbar ist.

Ein weiterer Fahrwagen ist aus der GB 2 427 174 A bekannt. Dieser Fahrwagen kann zum Gärtnern benutzt werden und ähnelt einem Golfkarren. Das Gestänge des Fahrwagens ist derart gestaltet, dass unterschiedliche Behälter aufgenommen werden können. Jedem speziellen Behälter ist eine spezielle Halterung zugeordnet.

Ein weiterer Reinigungsfahrwagen ist aus der DE 10 2005 044 984 B3 bekannt. Das Gestänge des vorbekannten Reinigungsfahrwagens umfasst Streben, die baukastenähnlich zusammensteckbar sind. Alle Streben des Gestänges erstrecken sich parallel oder rechtwinklig zueinander.

### Darstellung der Erfindung

Der Erfindung liegt die Aufgabe zugrunde, einen Reinigungsfahrwagen der vorbekannten Art derart weiter zu entwickeln, dass durch eine geschickte Anordnung des Gestänges zusätzlich Platz zur Unterbringung von Reinigungsutensilien gewonnen wird, dass der Reinigungsfahrwagen kompaktere Abmessungen aufweist, dadurch handlicher ist und in kleineren Räumen zur Anwendung gelangen kann und dass die Reinigungsutensilien bedarfsweise derart in und/oder am Reinigungsfahrwagen angeordnet sind, dass sie über die randseitige Begrenzung des Reinigungsfahrwagens nicht überstehen.

Diese Aufgabe wird erfindungsgemäß durch einen Reinigungsfahrwagen nach Anspruch 1 gelöst. Auf vorteilhafte Ausgestaltungen nehmen die Unteransprüche Bezug.

Zur Lösung der Aufgabe ist es vorgesehen, dass die erste Fläche kleiner als die zweite Fläche oder die zweite Fläche kleiner als die erste Fläche ist und dass die Platte mit der relativ kleineren Fläche neben dem entsprechenden Befestigungsbereich Platz zur Unterbringung von Reinigungsutensilien innerhalb der äußeren Begrenzung der jeweiligen Platte aufweist.
Der Raum zwischen der Bodenplatte und der Arbeitsplatte wird häufig genutzt, um dort Reinigungsutensilien, wie zum Beispiel Eimer, Putztücher, Abfalleimer und/oder Flächenreinigungsgeräte unterbringen zu können. Die Größe dieses Raums wird jedoch generell durch das Gestänge eingeschränkt, durch das die Bodenplatte mit der Arbeitsplatte verbunden ist. Hierbei ist es jedoch wichtig, dass der seitliche Zugang zu den Reinigungsutensilien, die mit dem Reinigungsfahrwagen transportiert werden, einfach möglich ist. Beispielsweise sollte ein langstieliges Bodenreinigungsgerät einfach vom Reinigungsfahrwagen entnommen und nach Benutzung daran wieder angebracht werden können.

Die Einschränkung des zur Verfügung stehenden Raums wird erfindungsgemäß dadurch minimiert, dass sich die zumindest zwei Streben, durch die die Bodenplatte mit der Arbeitsplatte verbunden ist, nicht-parallel zueinander erstrecken. Dadurch wird zusätzlicher Raum gewonnen, der zur Unterbringung von Reinigungsutensilien verwendet werden kann. Durch die nicht-parallele Erstreckung der Streben relativ zueinander sind die Streben stirnseitig einerseits mit einem kleineren Abstand zueinander benachbart angeordnet und stirnseitig andererseits mit einem größeren Abstand. Stirnseitig einerseits stehen also die Enden der Streben dichter zusammen, so dass dadurch mehr Platz zur umfangsseitigen Begrenzung der entsprechenden Platte zur Verfügung steht, in der die relativ dichter zusammen stehenden Stirnseiten der Streben angeordnet sind.

Die Streben können jeweils mit einem ersten stirnseitigen Ende mit einem ersten Befestigungsbereich der Bodenplatte verbunden sein und jeweils mit einem zweiten stirnseitigen Ende mit einem zweiten Befestigungsbereich der Arbeitsplatte. Je geringer die Anzahl der Streben ist und je filigraner diese ausgeführt sind, desto größer ist der verbleibende Raum, in dem Reinigungsutensilien untergebracht und transportiert werden können. Andererseits muss ein Reinigungsfahrwagen, insbesondere dann, wenn er gewerblich eingesetzt wird, eine ausreichend große Stabilität aufweisen und robust ausgeführt sein, so dass er gleichbleibend gute Gebrauchseigenschaften, zum Beispiel eine einfache Be- und Entladbarkeit mit Reinigungsutensilien und eine gute Lenkbarkeit, während einer langen Gebrauchsdauer aufweist.
Für diese Stabilität und Haltbarkeit ist eine nur einzige Strebe, durch die die Arbeitsplatte auf der Bodenplatte abgestützt ist, nicht ausreichend.
Auch zwei sich parallel zueinander erstreckende Streben, die sehr eng beieinander stehen und die jeweiligen Zentren von Bodenplatte und Arbeitsplatte miteinander verbinden, sind hinsichtlich einer ausreichenden Stabilität des Reinigungsfahrwagens, insbesondere einer stabilen Abstützung der Arbeitsplatte auf der Bodenplatte, nur wenig zufriedenstellend.

Der erste Befestigungsbereich weist eine erste Fläche auf und der zweite Befestigungsbereich eine zweite Fläche, wobei die erste Fläche kleiner als die zweite Fläche oder die zweite Fläche kleiner als die erste Fläche ist. Der Befestigungsbereich mit der kleineren Fläche ist immer Bestandteil der Platte, die mehr Platz zur Unterbringung der Reinigungsutensilien aufweisen soll. Wird zum Beispiel auf der Bodenplatte Platz benötigt, um innerhalb der umfangsseitigen Begrenzung der Bodenplatte einen Flachwischer abstellen zu können, dessen oberer Stielabschnitt zum Beispiel an der Arbeitsplatte gehalten ist, weist der erste Befestigungsbereich eine relativ kleine erste Fläche auf, so dass neben dieser relativ kleinen ersten Fläche genügend Platz zum Abstellen des Flachwischers verbleibt.
Ist demgegenüber gewünscht, dass unter der Arbeitsplatte ein möglichst großer Raum zur Verfügung steht, um zum Beispiel Reinigungstücher und/oder - bezüge unter der Arbeitsplatte befestigen zu können, oder kleine Eimer derart unter die Arbeitsplatte hängen zu können, dass sie nicht über die umfangsseitige Begrenzung der Arbeitsplatte hinausstehen, weist der zweite Befestigungsbereich eine relativ kleinere zweite Fläche auf.

Die ersten stirnseitigen Enden der Streben können demnach einen ersten Abstand voneinander aufweisen und die zweiten stirnseitigen Enden der Streben einen zweiten Abstand, wobei der erste Abstand oder der zweite Abstand kleiner als der zweite Abstand oder der erste Abstand ist. Durch die unterschiedlich großen Abstände wird die Stabilität des Reinigungsfahrwagens, insbesondere die Stabilität, mit der die Arbeitsplatte mit der Bodenplatte verbunden ist, vergrößert, bezogen auf eine solche Ausführung, bei der die Streben parallel und in kleinerem Abstand zueinander angeordnet sind.

Die Streben können, quer zu einer Hauptfahrrichtung des Reinigungsfahrwagens, trapezförmig zueinander angeordnet sein. Die Streben wären dann zu einer gedachten vertikalen Ebene, die in Hauptfahrrichtung angeordnet ist, symmetrisch angeordnet. Diese trapezförmige oder V-förmige Anordnung der Streben bewirkt einerseits eine gute Stabilität des Reinigungsfahrwagens, insbesondere quer zur Hauptfahrrichtung, und andererseits wird Platz für Reinigungsutensilien quer zur Hauptfahrrichtung beiderseits der gedachten Ebene geschaffen. Der gesamte Reinigungsfahrwagen kann dadurch im Wesentlichen symmetrisch zu der gedachten Ebene ausgebildet sein.

Wird beispielsweise quer zur Hauptfahrrichtung nur einerseits der gedachten Ebene Platz zur Unterbringung von Reinigungsutensilien benötigt, der jedoch relativ größer ist, als bei der zuvor beschriebenen symmetrischen Anordnung der Streben, besteht die Möglichkeit, eine der Streben senkrecht zwischen der Bodenplatte und der Arbeitsplatte, also parallel zu der gedachten Ebene anzuordnen und die andere Strebe geneigt dazu, so dass durch die stirnseitig einerseits enger zusammen stehenden Streben und dem daraus resultierenden kleinen Befestigungsbereich mehr Platz für die Unterbringung von Reinigungsutensilien entsteht.

Die Bodenplatte und/oder die Arbeitsplatte können Ausnehmungen zur Aufnahme der entsprechenden stirnseitigen Enden der Streben aufweisen, wobei die Ausnehmungen und die stirnseitigen Enden der Streben kongruent gestaltet sind. Die Verbindung der Bodenplatte mit der Arbeitsplatte mittels der Streben erweist sich durch eine derartige Ausgestaltung als besonders einfach und stabil. Die Montage des Reinigungsfahrwagens kann werkzeuglos einfach dadurch erfolgen, dass die Streben in die Ausnehmungen von Bodenplatte und Arbeitsplatte gesteckt werden. Der Reinigungsfahrwagen kann dadurch besonders einfach und schnell montiert und demontiert werden. Speziell bei gewerblicher Nutzung ist eine derartige Zeitersparnis von hervorzuhebendem Vorteil.

Die stirnseitigen Enden können kraftschlüssig in den jeweiligen Ausnehmungen angeordnet sein.

Werden die stirnseitigen Enden bei der Montage des Reinigungsfahrwagens in die jeweiligen Ausnehmungen geklemmt, kann diese Klemmung zum Beispiel dadurch erreicht werden, dass die Streben durch eine Übergangspassung oder eine leichte Presspassung in den Ausnehmungen gehalten sind oder zum Beispiel dadurch, dass die stirnseitigen Enden durch separat erzeugte Einlegekeile mit den Ausnehmungen verkeilt sind.
Generell ist eine nicht-stoffschlüssige Verbindung der Streben in den jeweiligen Ausnehmungen von Vorteil. Dadurch kann der Reinigungsfahrwagen jederzeit problemlos montiert oder demontiert werden.
Zusätzlich zu der kraftschlüssigen Verbindung kann die Verbindung formschlüssig ausgestaltet sein, zum Beispiel dadurch, dass die stirnseitigen Enden in den jeweiligen Ausnehmungen zusätzlich durch Querriegel, Schnapphaken oder auch Verschraubungen gehalten sind.

Hinsichtlich einer einfachen und kostengünstigen Herstellbarkeit des Reinigungsfahrwagens und im Hinblick auf eine möglichst einfache Montage, kann es bevorzugt vorgesehen sein, dass alle Streben als Gleichteile ausgebildet sind.

Die Streben können jeweils ein in Umfangsrichtung geschlossenes Profil ohne Hinterschneidungen aufweisen. Dadurch lässt sich der Reinigungsfahrwagen leicht sauber halten, weil sich auch die Streben einfach und gründlich reinigen lassen. Schmutzecken, wie sie beispielsweise bei offenen Profilen entstehen können, gibt es dadurch nicht.

Weiter bevorzugt können die Streben aus einem extrudierten oder verschweißten Profil bestehen, das als Meterware besonders einfach und kostengünstig herstellbar ist.

Die Streben können bevorzugt einen von der Kreisform abweichenden Querschnitt aufweisen. Hierbei ist von Vorteil, dass sich auf das nicht-runde Profil zum Beispiel zusätzliche Halter zur Aufnahme von weiteren Reinigungsutensilien aufclipsen lassen, wobei die Halter dann ohne zusätzliche Maßnahme verdrehgesichert an den Streben gehalten sind.

Die Streben können einen elliptischen Querschnitt aufweisen, mit jeweils einer Hauptachse, die sich im Wesentlichen in Hauptfahrrichtung des Reinigungsfahrwagens erstreckt. Dadurch, dass die Streben jeweils eine Hauptachse aufweisen, die in Hauptfahrrichtung relativ länger ist, bezogen auf die Nebenachse, die sich quer zur Hauptfahrrichtung erstreckt und relativ kürzer ist, ist die Stabilität des Reinigungsfahrwagens in Hauptfahrrichtung besonders groß. Die Gefahr einer möglichen Verformung der Streben beim Beschleunigen oder Bremsen des Reinigungsfahrwagens in oder entgegen der Hauptfahrrichtung ist dadurch auf ein Minimum reduziert.
Die Streben weisen bei geringem Eigengewicht in Hauptfahrrichtung eine besonders große Steifigkeit auf.

Die Hauptachsen der trapezförmig zueinander angeordneten Streben können in Hauptfahrrichtung konvergierend zueinander angeordnet sein. Zusammen mit entsprechend ausgebildeten Ausnehmungen in den Befestigungsbereichen von Bodenplatte und Arbeitsplatte wird dadurch sichergestellt, dass die Bodenplatte und die Arbeitsplatte nur lagerichtig zueinander montiert werden können. Würde der Monteur des Reinigungsfahrwagens beispielsweise versuchen, die Arbeitsplatte um 180° versetzt mit der Bodenplatte zu verbinden, würden sich die Streben nicht in den zweiten Befestigungsbereich der Arbeitsplatte einführen lassen. Durch die konvergierende Anordnung wird eine Montagesicherheit erreicht.

Die Hauptachsen können in Hauptfahrrichtung einen Winkel einschließen, der 2° bis 45°, bevorzugt 10° bis 15° beträgt, wobei sich definitionsgemäß auch dann die Hauptachsen der Streben noch im Wesentlichen in Hauptfahrrichtung des Reinigungsfahrwagens erstrecken. Durch einen solchen Winkel wird ein guter Kompromiss zwischen Stabilität der Streben in Hauptfahrrichtung einerseits und Montagesicherheit andererseits erreicht.

Die Ausnehmungen können eine Tiefe aufweisen, wobei das Verhältnis aus der Tiefe der Ausnehmungen, in denen die entsprechenden Streben aufgenommen sind, zur Länge der Hauptachse der aufgenommenen Streben idealerweise 1 bis 3 beträgt. Die Stabilität des Reinigungsfahrwagens wird auch durch diese Merkmale unterstützt. Dadurch, dass die Streben stirnseitig zumindest jeweils soweit in den Ausnehmungen aufgenommen sind, wie ihre Hauptachse lang ist, sind die Streben sowohl in der Bodenplatte als auch in der Arbeitsplatte ausreichend gut geführt. Weiterer Maßnahmen, um die Haltbarkeit des Reinigungsfahrwagens zu verbessern, zum Beispiel einer zusätzlichen Verstrebung, die auch wieder unerwünscht Bauraum beanspruchen würde, bedarf es daher nicht.

Die Bodenplatte und die Arbeitsplatte weisen jeweils eine äußere Begrenzung auf. Für viele Anwendungsfälle hat es sich als vorteilhaft bewährt, wenn sowohl die Bodenplatte als auch die Arbeitsplatte im Wesentlichen rechteckig ausgebildet sind.

In Abhängigkeit von den jeweiligen Gegebenheiten des Anwendungsfalles können Arbeitsplatte und Bodenplatte gleich oder unterschiedlich groß sein. Eine größere Bodenplatte wird beispielsweise dann vorgesehen, wenn Reinigungsutensilien auf der Bodenplatte abgestellt werden sollen. Ein solches Reinigungsutensil kann durch einen Flachwischer gebildet sein. Auf der relativ großen Bodenplatte wäre dann ein relativ kleiner erster Befestigungsbereich mit einer relativ kleinen ersten Fläche vorgesehen, wobei in der Bodenplatte die ersten stirnseitigen Enden der Streben mit einem kleinen ersten Abstand voneinander angeordnet sind.
Sollen demgegenüber Reinigungsutensilien, wie zum Beispiel Wischtücher oder Eimer, unter der Arbeitsplatte auf der der Bodenplatte zugewandten Seite untergebracht werden, ist die Arbeitsplatte bevorzugt größer als die Bodenplatte ausgebildet und der zweite Befestigungsbereich und die zweite Fläche sind relativ zum ersten Befestigungsbereich und der ersten Fläche kleiner, so dass neben den zweiten stirnseitigen Enden, die im zweiten Abstand relativ eng zueinander angeordnet sind, Platz für das Mitführen dieser Reinigungsutensilien vorhanden ist.

Der relativ kleinere erste oder zweite Befestigungsbereich kann mit der äußeren Begrenzung der relativ größeren Bodenplatte oder Arbeitsplatte eine Ablagefläche für zumindest ein Reinigungsutensil begrenzen.

Die Ablagefläche, die durch die erfindungsgemäße Anordnung der Streben entsteht, kann eine Breite von zumindest 50 mm aufweisen. Eine solche Breite ist von Vorteil, um auch Flachwischer, deren Breite im aufgeklappten/aufgestellten Zustand bevorzugt 100 mm beträgt, auf dem Reinigungsfahrwagen mitführen zu können, ohne dass der Flachwischer über die größte umfangsseitige Begrenzung der Bodenplatte übersteht.

Die Bodenplatte kann auf der der Arbeitsplatte abgewandten Seite Räder aufweisen, wobei bevorzugt vier Räder zur Anwendung gelangen, von denen nur die in Fahrrichtung vorderen Räder lenkbar ausgebildet sind. Die Manövrierfähigkeit des Reinigungsfahrwagens ist dadurch besonders gut.

Ein Ausführungsbeispiel eines erfindungsgemäßen Reinigungsfahrwagens wird nachfolgend anhand der Figuren 1 bis 8 näher erläutert.

### Kurzbeschreibung der Zeichnung

Die Figuren 1 bis 8 zeigen dabei jeweils in schematischer Darstellung:
- Fig. 1: einen Reinigungsfahrwagen in einer perspektivischen Ansicht von schräg vorn und oben,
- Fig. 2: eine Vorderansicht einer zur Anwendung gelangenden Strebe,
- Fig. 3: einen Seitenansicht der Strebe aus Fig. 2,
- Fig. 4: eine Draufsicht auf die Strebe aus Fig. 2 und 3,
- Fig. 5: die Bodenplatte als Einzelteil in einer Draufsicht,
- Fig. 6: die Arbeitsplatte in einer Ansicht von unten,
- Fig. 7: eine Draufsicht auf die relativ kleinere Arbeitsplatte, die mittels der Streben über der relativ größerem Bodenplatte montiert ist und
- Fig. 8: einen Ausschnitt aus der Bodenplatte, wobei in der Ausnehmung eine Strebe angeordnet ist.

### Ausführung der Erfindung

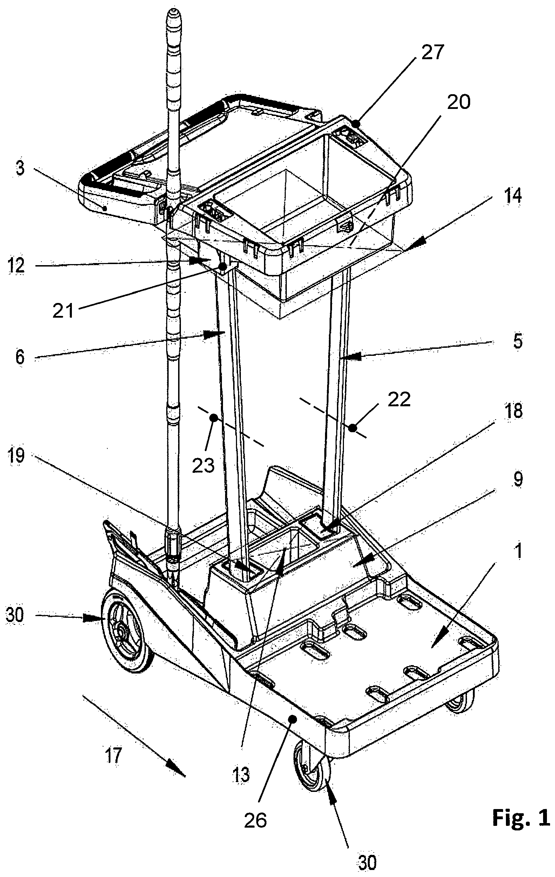

In Fig. 1 ist ein Ausführungsbeispiel des erfindungsgemäßen Reinigungsfahrwagens in perspektivischer Darstellung gezeigt.

Der Reinigungsfahrwagen umfasst eine Bodenplatte 1, die im Wesentlichen rechteckig ausgebildet ist, wobei auf der Unterseite der Bodenplatte 1 in jedem Eck ein Rad 30 angeordnet ist. Die in Hauptfahrrichtung 17 vorn angeordneten Räder 30 sind lenkbar, die in Hauptfahrrichtung 17 hinten angeordneten Räder 30 starr.

Auf der der Arbeitsplatte 3 zugewandten Oberseite weiß die Bodenplatte 1 einen ersten Befestigungsbereich 9 auf, wobei der erste Befestigungsbereich 9 eine relativ kleine erste Fläche 13 aufweist, bezogen auf die zweite Fläche 14 des zweiten Befestigungsbereichs 12 der Arbeitsplatte 3.
Der erste Befestigungsbereich 9 umfasst die beiden Ausnehmungen 18, 19 zur Aufnahme der ersten stirnseitigen Enden 7, 8 der Streben 5, 6.

Die Arbeitsplatte 3 weist auf ihrer Unterseite einen zweiten Befestigungsbereich 12 auf, in dem die zweiten stirnseitigen Enden 10, 11 der Streben 5, 6 aufgenommen sind. Der zweite Befestigungsbereich 12 weist eine zweite Fläche 14 auf, die relativ größer ist als die erste Fläche 13 des ersten Befestigungsbereichs 9 der Bodenplatte 1.

In dem hier dargestellten Ausführungsbeispiel sind die Bodenplatte 1 und die Arbeitsplatte 3 durch die beiden sich nicht-parallel zueinander erstreckenden Streben 5, 6, die im vertikalen Abstand 2 zwischen der Bodenplatte 1 und der Arbeitsplatte 3 angeordnet sind, miteinander verbunden. Die Streben 5, 6 bilden das Gestänge 4.

Die Streben 5, 6 sind als Gleichteile ausgebildet und haben einen geschlossenen elliptisches Querschnitt. Die Streben 5, 6 sind dabei derart mit der Bodenplatte 1 und der Arbeitsplatte 3 verbunden, dass sich die Hauptachsen 22, 23 des elliptischen Querschnitts der Streben 5, 6 in Hauptfahrrichtung 17 des Reinigungsfahrwagens erstrecken, wobei die Hauptachsen 22, 23 in Hauptfahrrichtung 17 gemeinsam einen Winkel 24, 25 einschließen, der etwa 7° beträgt. Dadurch kann die Arbeitsplatte 3 nur lagerichtig mit der Bodenplatte 1 verbunden werden. Der nur kleine Winkel 24, 25, den die Hauptachsen 22, 23 miteinander einschließen, ist lediglich als Montagesicherheit vorgesehen.

Bereits in dieser Ansicht ist zu erkennen, dass die äußere Begrenzung 26 der Bodenplatte 1 größer als die äußere Begrenzung 27 der Arbeitsplatte 3 ist, so dass sich zwischen dem relativ kleineren ersten Befestigungsbereich 9 der Bodenplatte 1 und der äußeren Begrenzung 26 eine Ablagefläche 28 für Reinigungsutensilien, im hier gezeigten Fall für einen Flachwischer, ergibt. Die Breite 29 der Ablagefläche 28 beträgt im gezeigten Ausführungsbeispiel 100 mm.
Die Wischfläche des Flachwischers befindet sich vollständig innerhalb der äußeren Begrenzung 26 der Bodenplatte 1, so dass über diese äußere Begrenzung 26 keine Teile des Reinigungsfahrwagens und/oder der im/am Reinigungsfahrwagen untergebrachten Reinigungsutensilien überstehen.
Der Stiel des Flachwischers erstreckt vertikal sich von der Bodenplatte 1 in Richtung der Arbeitsplatte 3 und ist an der Arbeitsplatte 3 zum Beispiel durch einen Clip befestigt.

Im hier gezeigten Ausführungsbeispiel sind die Streben 5, 6 quer zu der Hauptfahrrichtung 17 des Reinigungsfahrwagens trapezförmig zueinander angeordnet und zwar symmetrisch zu einer gedachten, vertikalen Ebene 31, die sich in Hauptfahrrichtung 17 des Reinigungsfahrwagens erstreckt; die Streben 5, 6 sind symmetrisch zu dieser Ebene 31 angeordnet.
Durch die symmetrische Anordnung der Streben 5, 6 zur Eben 31 ergibt sich quer zur Hauptfahrrichtung 17 beiderseits auf der Oberseite der Bodenplatte 1 Ablageflächen 28.1, 28.2.

Davon abweichend besteht jedoch auch die Möglichkeit, die Streben 5, 6 asymmetrisch, bezogen auf die Ebene 31 anzuordnen.

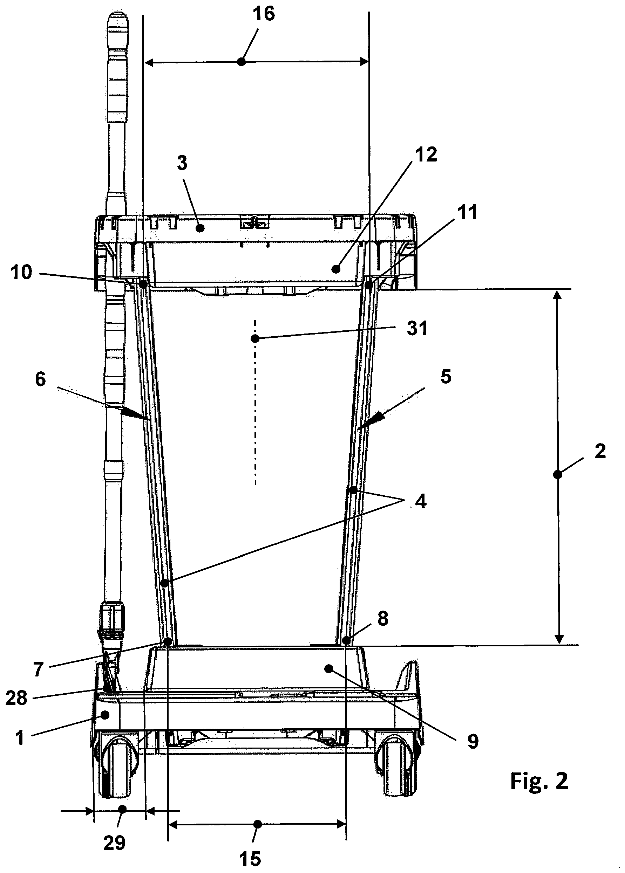

In den Fig. 2 bis 4 ist eine der Streben 5, 6 gezeigt.

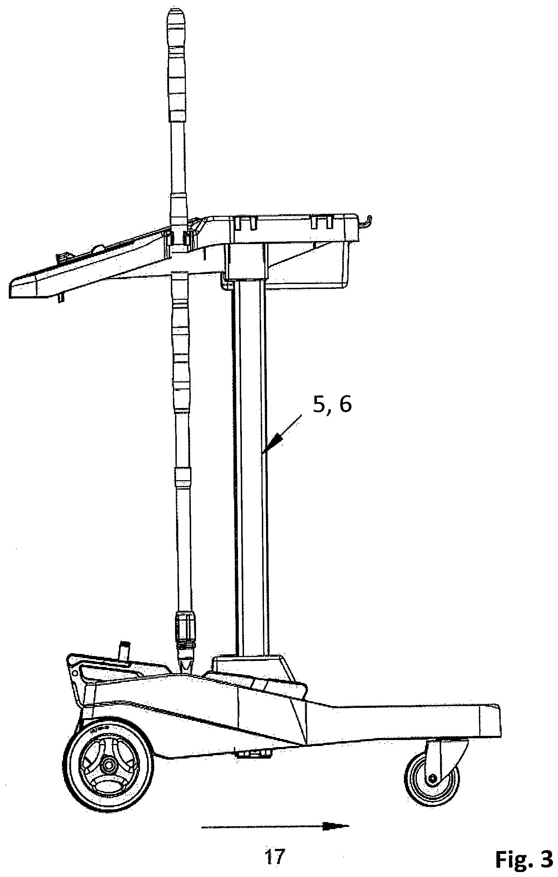

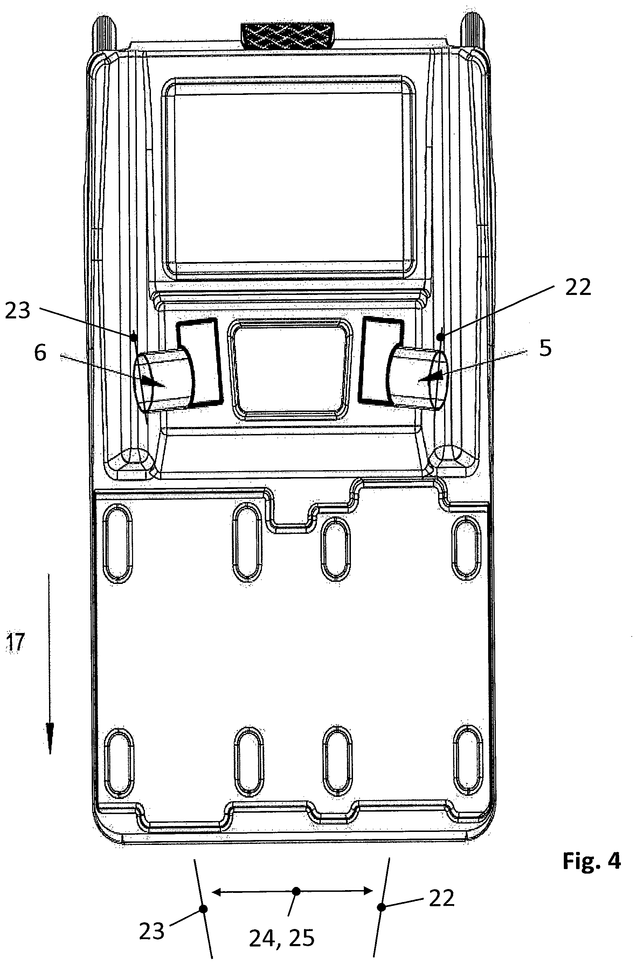

In Fig. 2 ist die gezeigte Strebe 5, 6 von vorn, in Fig. 3 von der Seite und in Fig. 4 von oben gezeigt.
Die Streben 5, 6 sind als Gleichteile ausgebildet und haben einen elliptischen Querschnitt. Die Hauptachse 22, 23 der Strebe 5, 6 erstreckt sich im eingebauten Zustand der Streben 5, 6 im Wesentlichen in Hauptfahrrichtung 17 des Reinigungsfahrwagens, so dass die Abstützung der Arbeitsplatte 3 auf der Bodenplatte 1 mittels der Streben 5, 6 speziell in Hauptfahrrichtung 17, besonders steif ist.

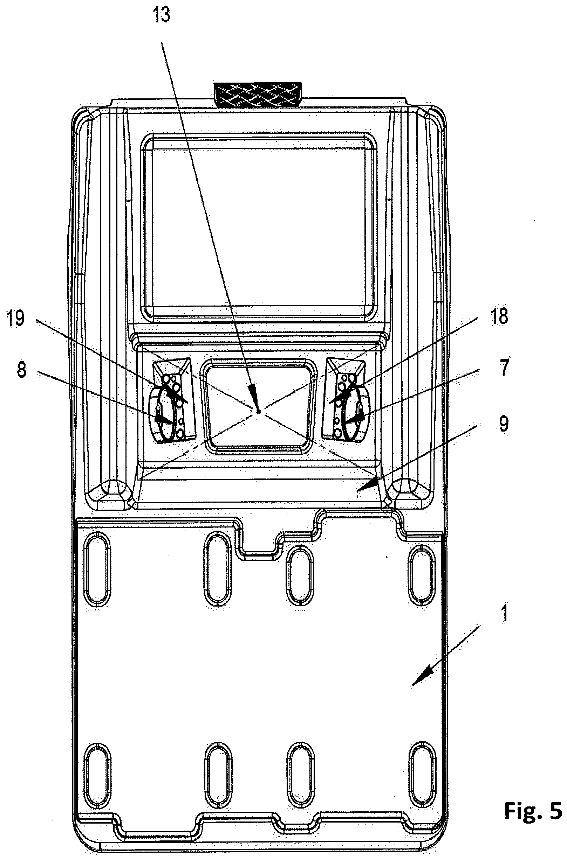

In Fig. 5 ist die Bodenplatte 1 in einer Draufsicht gezeigt. Auf der Bodenplatte 1 befindet sich der erste Befestigungsbereich 9, der nur eine vergleichsweise kleine erste Fläche 13 hat. Der erste Befestigungsbereich 9 umfasst die Ausnehmungen 18, 19, in denen im montierten Zustand des Reinigungsfahrwagens die ersten stirnseitigen Enden 7, 8 der Streben 5, 6 angeordnet sind. Die Tiefe der Ausnehmungen 18, 19 ist zumindest so groß, wie die Hauptachsen 22, 23 der Streben 5, 6 lang.
Die Bodenplatte 1 besteht insgesamt aus einem polymeren Werkstoff und ist einstückig ausgeführt.

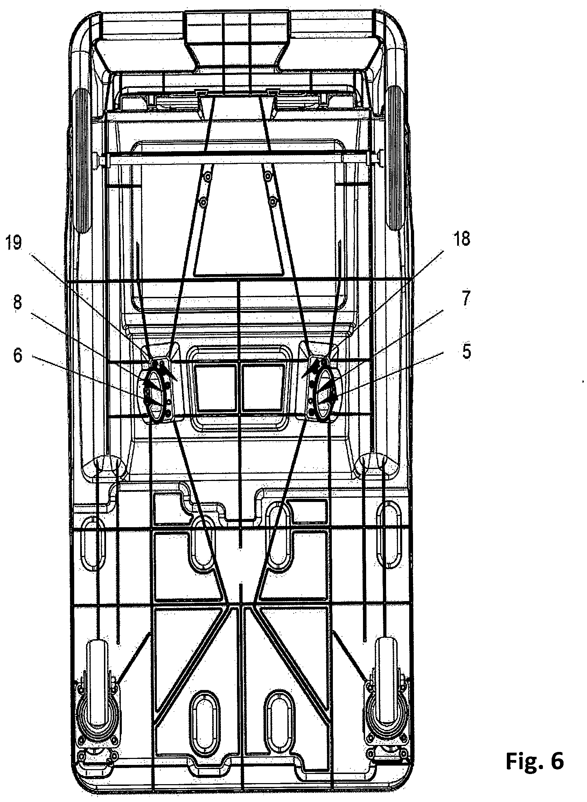

In Fig. 6 ist die Arbeitsplatte 3 von unten gezeigt. Auch die Arbeitsplatte 3 besteht aus einem polymeren Werkstoff und ist einstückig ausgebildet. Auf ihrer der Bodenplatte 1 zugewandten Unterseite weist die Arbeitsplatte 3 den zweiten Befestigungsbereich 12 auf, mit einer zweiten Fläche 14, die größer ist, als die erste Fläche 13 des ersten Befestigungsbereichs 9 der Bodenplatte 1.

In den Fig. 5 und 6 ist zu erkennen, dass die ersten stirnseitigen Enden 7, 8 der Streben 5, 6 und damit die Ausnehmungen 18, 19 einen ersten Abstand 15 voneinander aufweisen und die zweiten stirnseitigen Enden 10, 11 und damit die Ausnehmungen 20, 21 einen zweiten Abstand 16, wobei der erste Abstand 15 durch die im Wesentlichen trapezförmige Anordnung der Streben 5, 6 kleiner als der zweite Abstand 16 ist.

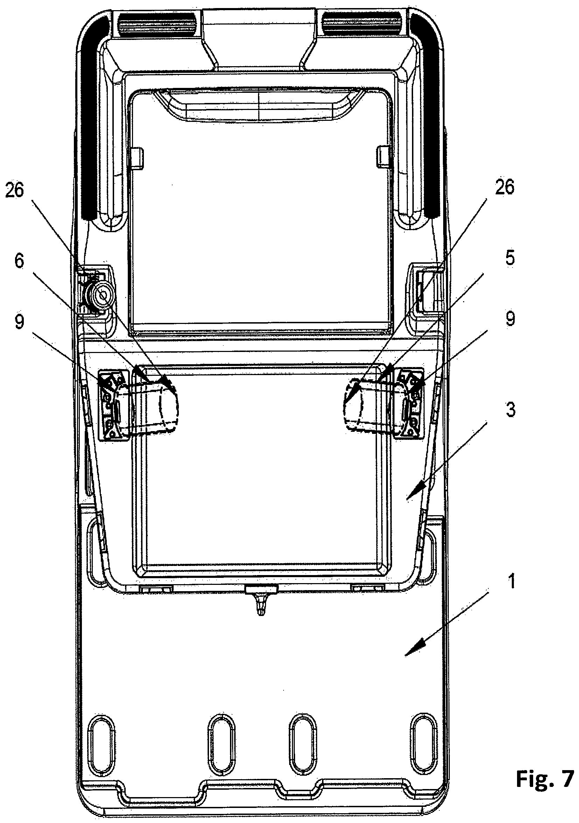

In Fig. 7 ist eine Draufsicht auf den Reinigungsfahrwagen gezeigt. Es ist zu erkennen, dass die Arbeitsplatte 3 kleiner als die Bodenplatte 1 ist. In gestichelten Linien sind die Streben 5, 6 eingezeichnet und der erste Befestigungsbereich 9, wobei zwischen dem ersten Befestigungsbereich 9 und der äußeren Begrenzung 26 der Bodenplatte 1, quer zur Hauptfahrrichtung 17, jeweils eine Ablagefläche 28.1, 28.2 angeordnet ist. Auf den Ablageflächen 28.1, 28.2 ist jeweils ein Flachwischer abgestützt.

Die äußere Begrenzung 26 der Bodenplatte 1 wird von keinem Reinigungsutensil und auch von keinem anderen Bauteil des Reinigungsfahrwagens überragt, so dass auch in engen Räumen nicht die Gefahr besteht, dass durch über die äußere Begrenzung 26 überstehende Bauteile Möbel oder Wände beschädigt werden.

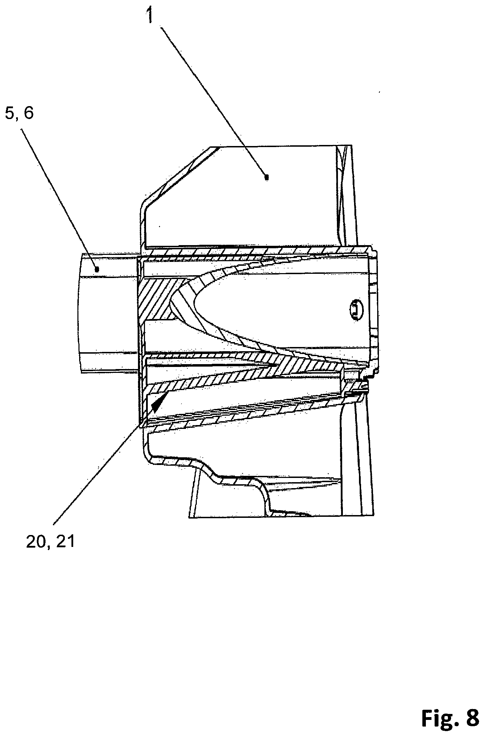

In Fig. 8 ist ein Ausschnitt aus dem ersten Befestigungsbereich 9 der Bodenplatte 1 gezeigt. In dem Befestigungsbereich 9 sind die Ausnehmungen 18, 19 angeordnet, die im hier gezeigten Ausführungsbeispiel kongruent zu den ersten stirnseitigen Ende 7, 8 der Streben 5, 6 ausgebildet sind.
Die Tiefe der Ausnehmungen 18, 19 entspricht der entsprechenden Länge der Hauptachsen 22, 23 der Streben 5, 6. Durch die relativ große Überdeckung, mit der die Streben 5, 6 in den Ausnehmungen 18, 19 angeordnet sind, ergibt sich eine gute Stabilität des Reinigungsfahrwagens und die Möglichkeit, die Streben 5, 6 werkzeuglos in die Ausnehmungen 18, 19, 20, 21 montieren zu können.

## Patentansprüche

1. Reinigungsfahrwagen, umfassend eine Bodenplatte (1) und eine mit vertikalem Abstand (2) über der Bodenplatte (1) angeordnete Arbeitsplatte (3), wobei die Bodenplatte (1) und die Arbeitsplatte (3) durch ein in dem vertikalen Abstand (2) angeordnetes Gestänge (4) miteinander verbunden sind, wobei das Gestänge(4) durch zumindest zwei sich quer zu einer Hauptfahrrichtung (17) des Reinigungsfahrwagens nicht-parallel zueinander erstreckende Streben (5, 6) gebildet ist, wobei die Streben (5, 6) jeweils mit einem ersten stirnseitigen Ende (7, 8) mit einem ersten Befestigungsbereich (9) der Bodenplatte (1) verbunden sind und jeweils mit einem zweiten stirnseitigen Ende (10, 11) mit einem zweiten Befestigungsbereich (12) der Arbeitsplatte (3),wobei der erste Befestigungsbereich (9) eine erste Fläche (13) aufweist und der zweite Befestigungsbereich (12) eine zweite Fläche (14), **dadurch gekennzeichnet, dass** die erste Fläche (13) kleiner als die zweite Fläche (14) oder die zweite Fläche (14) kleiner als die erste Fläche (13) ist sodass die Platte (1, 3) mit der relativ kleineren Fläche (13, 14) quer zur Hauptfahrrichtung (17) neben dem entsprechenden Befestigungsbereich (9, 12) Platz zur Unterbringung von Reinigungsutensilien innerhalb der äußeren Begrenzung (26, 27) der jeweiligen Platte (1, 3) aufweist.

2. Reinigungsfahrwagen nach Anspruch 1, **dadurch gekennzeichnet, dass** die ersten stirnseitigen Enden (7, 8) der Streben (5, 6) einen ersten Abstand (15) voneinander aufweisen und die zweiten stirnseitigen Enden (10, 11) der Streben einen zweiten Abstand (16) und dass der erste Abstand (15) oder der zweite Abstand (16) kleiner als der zweite Abstand (16) oder der erste Abstand (15) ist.

3. Reinigungsfahrwagen nach einem der Ansprüche 1 oder 2, **dadurch gekennzeichnet, dass** die Streben (5, 6), quer zu einer Hauptfahrrichtung (17) des Reinigungsfahrwagens, trapezförmig zueinander angeordnet sind.

4. Reinigungsfahrwagen nach einem der Ansprüche 1 bis 3, **dadurch gekennzeichnet, dass** die stirnseitigen Enden (7, 8, 10, 11) kraft- und /oder formschlüssig in jeweiligen Ausnehmungen (18, 19, 20, 21) der Bodenplatte (1) und/oder der Arbeitsplatte (3) angeordnet sind.

5. Reinigungsfahrwagen nach einem der Ansprüche 1 bis 4, **dadurch gekennzeichnet, dass** alle Streben (5, 6) als Gleichteile ausgebildet sind.

6. Reinigungsfahrwagen nach einem der Ansprüche 1 bis 5, **dadurch gekennzeichnet, dass** die Streben (5, 6) jeweils ein in Umfangsrichtung geschlossenes Profil ohne Hinterschneidungen aufweisen.

7. Reinigungsfahrwagen nach einem der Ansprüche 1 bis 6, **dadurch gekennzeichnet, dass** die Streben (5, 6) jeweils einen von der Kreisform abweichenden Querschnitt aufweisen.

8. Reinigungsfahrwagen nach einem der Ansprüche 1 bis 7, **dadurch gekennzeichnet, dass** die Streben (5, 6) einen elliptischen Querschnitt aufweisen, mit jeweils einer Hauptachse (22, 23), die sich im Wesentlichen in Hauptfahrrichtung (17) des Reinigungsfahrwagens erstreckt.

9. Reinigungsfahrwagen nach Anspruch 8, **dadurch gekennzeichnet, dass** die Hauptachsen (22, 23) der trapezförmig zueinander angeordneten Streben (5, 6) in Hauptfahrrichtung (17) konvergierend zueinander angeordnet sind.

10. Reinigungsfahrwagen nach Anspruch 9, **dadurch gekennzeichnet, dass** die Hauptachsen (22, 23) in Hauptfahrrichtung (17) einen Winkel (24, 25) einschließen, der 2° bis 45° beträgt.

11. Reinigungsfahrwagen nach einem der Ansprüche 4 bis 10, **dadurch gekennzeichnet, dass** die Ausnehmungen (18, 19, 20, 21) eine Tiefe aufweisen und dass das Verhältnis aus der Tiefe der Ausnehmungen (18, 19, 20, 21), in denen die entsprechenden Streben (5, 6) aufgenommen sind, zur Länge der Hauptachse (22, 23) der aufgenommenen Streben (5, 6) 1 bis 3 beträgt.

12. Reinigungsfahrwagen nach einem der Ansprüche 1 bis 11, **dadurch gekennzeichnet, dass** die Bodenplatte (1) und die Arbeitsplatte (3) jeweils eine äußere Begrenzung (26, 27) aufweisen.

13. Reinigungsfahrwagen nach einem der Ansprüche 1 bis 12, **dadurch gekennzeichnet, dass** die Bodenplatte (1) oder die Arbeitsplatte (3), quer zur Hauptfahrrichtung (17), größer oder gleichgroß wie die Arbeitsplatte (3) oder die Bodenplatte (1) ausgebildet ist.

14. Reinigungsfahrwagen nach einem der Ansprüche 1 bis 13, **dadurch gekennzeichnet, dass** der relativ kleinerer erste (9) oder zweite Befestigungsbereich (12) mit der äußeren Begrenzung (26, 27) der relativ größeren Bodenplatte (1) oder Arbeitsplatte (3) eine Ablagefläche (28) für zumindest ein Reinigungsutensil begrenzt.

15. Reinigungsfahrwagen nach Anspruch 14, **dadurch gekennzeichnet, dass** die Ablagefläche (28) eine Breite (29) von zumindest 50 mm aufweist.

## Claims

1. Cleaning cart comprising a base plate (1) and a working plate (3) arranged at a vertical distance (2) above the base plate (1), wherein the base plate (1) and the working plate (3) are connected to each other by a linkage (4) arranged within the vertical distance (2), wherein the linkage (4) is formed by at least two struts (5, 6) extending in a non-parallel manner with respect to each other transversely with respect to a main travel direction (17) of the cleaning cart, wherein the struts (5, 6) are in each case connected at a first end-side end (7, 8) to a first fastening region (9) of the base plate (1) and in each case at a second end-side end (10, 11) to a second fastening region (12) of the working plate (3), wherein the first fastening region (9) has a first area (13) and the second fastening region (12) has a second area (14), **characterized in that** the first area (13) is smaller than the second area (14) or the second area (14) is smaller than the first area (13), and therefore the plate (1, 3) with the relatively smaller area (13, 14) has space transversely with respect to the main travel direction (17) next to the corresponding fastening region (9, 12) for accommodating cleaning utensils within the outer boundary (26, 27) of the respective plate (1, 3).

2. Cleaning cart according to Claim 1, **characterized in that** the first end-side ends (7, 8) of the struts (5, 6) are at a first distance (15) from each other, and the second end-side ends (10, 11) of the struts are at a second distance (16), and **in that** the first distance (15) or the second distance (16) is smaller than the second distance (16) or the first distance (15).

3. Cleaning cart according to one of Claims 1 and 2, **characterized in that** the struts (5, 6) are arranged trapezoidally with respect to each other, transversely with respect to a main travel direction (17) of the cleaning cart.

4. Cleaning cart according to one of Claims 1 to 3, **characterized in that** the end-side ends (7, 8, 10, 11) are arranged in a frictional and/or form-fitting manner in respective recesses (18, 19, 20, 21) of the base plate (1) and/or of the working plate (3).

5. Cleaning cart according to one of Claims 1 to 4, **characterized in that** all of the struts (5, 6) are designed as identical parts.

6. Cleaning cart according to one of Claims 1 to 5, **characterized in that** the struts (5, 6) each have a profile which is closed in the circumferential direction and does not have undercuts.

7. Cleaning cart according to one of Claims 1 to 6, **characterized in that** the struts (5, 6) each have a cross section differing from the circular shape.

8. Cleaning cart according to one of Claims 1 to 7, **characterized in that** the struts (5, 6) have an elliptical cross section, with a respective main axis (22, 23) which extends substantially in the main travel direction (17) of the cleaning cart.

9. Cleaning cart according to Claim 8, **characterized in that** the main axes (22, 23) of the struts (5, 6) arranged trapezoidally with respect to each other are arranged converging with respect to each other in the main travel direction (17).

10. Cleaning cart according to Claim 9, **characterized in that** the main axes (22, 23) enclose an angle (24, 25) of 2° to 45° in the main travel direction (17).

11. Cleaning cart according to one of Claims 4 to 10, **characterized in that** the recesses (18, 19, 20, 21) have a depth, and **in that** the ratio of the depth of the recesses (18, 19, 20, 21), in which the corresponding struts (5, 6) are accommodated, to the length of the main axis (22, 23) of the accommodated struts (5, 6) is 1 to 3.

12. Cleaning cart according to one of Claims 1 to 11, **characterized in that** the base plate (1) and the working plate (3) respectively have an outer boundary (26, 27).

13. Cleaning cart according to one of Claims 1 to 12, **characterized in that** the base plate (1) or the working plate (3) is designed to be larger than or the same size as the working plate (3) or the base plate (1), transversely with respect to the main travel direction (17).

14. Cleaning cart according to one of Claims 1 to 13, **characterized in that** the relatively smaller first fastening region (9) or second fastening region (12) together with the outer boundary (26, 27) of the relatively larger base plate (1) or working plate (3) bounds a depositing area (28) for at least one cleaning utensil.

15. Cleaning cart according to Claim 14, **characterized in that** the depositing area (28) has a width (29) of at least 50 mm.

## Revendications

1. Chariot de nettoyage, comprenant un plateau de base (1) et un plateau de travail (3) disposé à une distance verticale (2) au-dessus du plateau de base (1), dans lequel le plateau de base (1) et le plateau de travail (3) sont reliés l'un à l'autre par des barres (4) disposées dans la distance verticale (2), dans lequel les barres (4) sont formées par au moins deux montants non parallèles l'un à l'autre (5, 6) s'étendant transversalement à la direction de déplacement principale (17) du chariot de nettoyage, dans lequel les montants (5, 6) sont respectivement reliés par une première extrémité frontale (7, 8) à une première région de fixation (9) du plateau de base (1) et respectivement par une deuxième extrémité frontale (10, 11) à une deuxième région de fixation (12) du plateau de travail (3), dans lequel la première région de fixation (9) présente une première face (13) et la deuxième région de fixation (12) présente une deuxième face (14),
**caractérisé en ce que** la première face (13) est plus petite que la deuxième face (14) ou la deuxième face (14) est plus petite que la première face (13), de telle manière que le plateau (1, 3) avec la face relativement plus petite (13, 14) présente transversalement à la direction de déplacement principale (17), en plus de la région de fixation correspondante (9, 12), de la place pour le rangement d'ustensiles de nettoyage à l'intérieur de la plinthe extérieure (26, 27) du plateau respectif (1, 3).

2. Chariot de nettoyage selon la revendication 1, **caractérisé en ce que** les premières extrémités frontales (7, 8) des montants (5, 6) présentent une première distance (15) l'une de l'autre et les deuxièmes extrémités frontales (10, 11) des montants présentent une deuxième distance (16) et **en ce que** la première distance (15) ou la deuxième distance (16) est plus petite que la deuxième distance (16) ou que la première distance (15).

3. Chariot de nettoyage selon une des revendications 1 ou 2, **caractérisé en ce que** les montants (5, 6) sont disposés l'un par rapport à l'autre en forme de trapèze transversalement à une direction de déplacement principale (17) du chariot de nettoyage.

4. Chariot de nettoyage selon l'une quelconque des revendications 1 à 3, **caractérisé en ce que** les extrémités frontales (7, 8, 10, 11) sont logées par serrage et/ou par emboîtement dans des évidements respectifs (18, 19, 20, 21) du plateau de base (1) et/ou du plateau de travail (3).

5. Chariot de nettoyage selon l'une quelconque des revendications 1 à 4, **caractérisé en ce que** tous les montants (5, 6) sont constitués par des pièces identiques.

6. Chariot de nettoyage selon l'une quelconque des revendications 1 à 5, **caractérisé en ce que** les montants (5, 6) présentent chacun un profil fermé en direction périphérique sans contre-dépouilles.

7. Chariot de nettoyage selon l'une quelconque des revendications 1 à 6, **caractérisé en ce que** les montants (5, 6) présentent chacun une section transversale s'écartant de la forme circulaire.

8. Chariot de nettoyage selon l'une quelconque des revendications 1 à 7, **caractérisé en ce que** les montants (5, 6) présentent une section transversale elliptique, avec chaque fois un axe principal (22, 23) qui s'étend essentiellement dans la direction de déplacement principale (17) du chariot de nettoyage.

9. Chariot de nettoyage selon la revendication 8, **caractérisé en ce que** les axes principaux (22, 23) des montants (5, 6) disposés l'un par rapport à l'autre en forme de trapèze sont disposés en position convergente l'un vers l'autre dans la direction de déplacement principale (17).

10. Chariot de nettoyage selon la revendication 9, **caractérisé en ce que** les axes principaux (22, 23) forment dans la direction de déplacement principale (17) un angle (24, 25), qui vaut 2° à 45°.

11. Chariot de nettoyage selon l'une quelconque des revendications 4 à 10, **caractérisé en ce que** les évidements (18, 19, 20, 21) présentent une profondeur et **en ce que** le rapport de la profondeur des évidements (18, 19, 20, 21), dans lesquels les montants correspondants (5, 6) sont logés, à la longueur de l'axe principal (22, 23) des montants logés (5, 6) vaut de 1 à 3.

12. Chariot de nettoyage selon l'une quelconque des revendications 1 à 11, **caractérisé en ce que** le plateau de base (1) et le plateau de travail (3) présentent chacun une plinthe extérieure (26, 27).

13. Chariot de nettoyage selon l'une quelconque des revendications 1 à 12, **caractérisé en ce que** le plateau de base (1) ou le plateau de travail (3) est formé, transversalement à la direction de déplacement principale (17), avec une dimension supérieure ou égale au plateau de travail (3) ou au plateau de base (1).

14. Chariot de nettoyage selon l'une quelconque des revendications 1 à 13, **caractérisé en ce que** la première (9) ou la deuxième (12) région de fixation relativement plus petite limite avec la plinthe extérieure (26, 27) du plateau de base (1) ou du plateau de travail (3) relativement plus grand une face de dépôt (28) pour au moins un ustensile de nettoyage.

15. Chariot de nettoyage selon la revendication 14, **caractérisé en ce que** la face de dépôt (28) présente une largeur (29) d'au moins 50 mm.
